# DEMANDE DE BREVET EUROPEEN

(11) **EP 4 344 967 A1**
(43) Date de publication de la demande: **03.04.2024**
(21) Numéro de dépôt: 23199843.6
(22) Date de dépôt: 26.09.2023
(51) Int. Cl.: B60T 7/12, B60T 13/74

(54) **SYSTEME DE FREINAGE COMPORTANT AU MOINS UN FREIN DE PARKING**

(30) Priorité: 28.09.2022 FR 2209846
(71) Demandeur: Hitachi Astemo France, 93700 Drancy (FR); Hitachi Astemo Heilbronn GmbH, 74072 Heilbronn (DE)
(72) Inventeur: SASSO, Julien, 77420 CHAMPS-SUR-MARNE (FR); DEMANDRE, Maxime, 70469 STUTTGART (DE); WANG, Weiqiao, 75017 PARIS (FR); PATRAO CARQUEIJO, Alex, 93500 PANTIN (FR)
(74) Mandataire: Scrivano, Nicolas Jean-Marie

(57) **Abrégé**

Système de freinage pour véhicule automobile comportant au moins un frein de parking (FP) à actionnement électrique destiné à être positionné au niveau d'une roue, une unité de commande (UC) configurée pour générer un ordre au frein de parking (FP) pour appliquer un freinage de parking ou interrompre l'application d'un freinage de parking à une première intensité suite à une première requête, dans lequel l'unité de commande (UC) est également configurée pour générer un ordre au frein de parking (FP) d'appliquer un freinage de parking à une deuxième intensité suite à une deuxième requête émise après la première requête.

## Description

### DOMAINE TECHNIQUE ET ART ANTERIEUR

La présente invention se rapporte à un système de freinage pour véhicule automobile et à un procédé de fonctionnement d'un tel système de freinage.

Les véhicules automobiles sont équipés d'un système de freinage comportant un frein au niveau de chaque roue.

Le système de freinage assure un freinage de service, qui permet de ralentir le véhicule et de l'arrêter. Le freinage de service est obtenu généralement par un appui sur une pédale de frein. Le freinage de service peut être géré automatiquement par une unité de commande, par exemple dans le cas où une régulation automatique de la vitesse est souhaitée.

Le système de freinage assure également le freinage de parking qui a pour objectif d'immobiliser le véhicule lorsqu'il est stationné. Le frein de parking peut également être utilisé comme frein de secours.

Jusqu'à récemment l'actionnement du frein de parking était réalisé par le conducteur qui exerçait une traction sur un levier de frein relié directement aux freins des roues arrière par un câble, plus la traction était importante plus le niveau de freinage de parking était important. Le conducteur pouvait donc moduler le niveau de freinage du frein de parking.

De manière de plus en plus fréquente, l'actionnement du frein de parking est obtenu en appuyant sur un bouton qui envoie un signal à l'unité de commande qui active des moteurs électriques.

Le niveau de freinage appliqué par les freins lors d'un freinage de parking est fixé par l'unité de commande en fonction de la situation de stationnement du véhicule. Lorsque le véhicule est stationné à l'horizontal le niveau de freinage est fixé à une première valeur, alors que lorsque le véhicule est stationné sur une pente, le niveau de freinage est fixé à une deuxième valeur supérieure à la première valeur. Ce niveau de freinage est fixé définitivement pendant toute la phase de stationnement du véhicule et ne peut pas être modifié.

Les inventeurs ont identifié que dans certaines situations de stationnement il était souhaitable de pouvoir augmenter le niveau de freinage. Par exemple lorsqu'un véhicule doit être transporté par une semi-remorque porte-voitures, le véhicule est monté sur la remorque et est stationné à l'horizontal ou sensiblement à l'horizontal. Le frein de parking est activé. Le véhicule étant à l'horizontal le niveau de freinage appliqué aux roues est celui programmé pour un véhicule stationné à l'horizontal. Or il arrive que sur ce type de remorque certains véhicules soient positionnés de manière inclinée pour optimiser le nombre de véhicules transportées. Pour cela la remorque comporte des parties inclinables. Cette partie chargée du véhicule est alors inclinée après que le véhicule a été stationné à l'horizontal et que le frein de parking a été activé. Il en résulte que le véhicule est stationné sur une pente et que le niveau de freinage est celui d'un stationnement à l'horizontal ou sensiblement à l'horizontal. Il en résulte un risque que l'immobilisation du véhicule ne soit pas suffisante.

### EXPOSE DE L'INVENTION

C'est par conséquent un but de la présente demande d'offrir un système de freinage ne présentant pas l'inconvénient ci-dessus.

Le but énoncé ci-dessus est atteint par un système de freinage pour véhicule automobile comportant au moins un frein de parking destiné à être positionné au niveau d'une roue et une unité de commande destinée à commander le frein pour assurer un freinage de parking, ladite unité de commande étant configurée pour que, suite à une deuxième requête d'application du frein de parking faisant suite à une première requête d'application du frein de parking, l'unité de commande envoie une instruction de modifier le niveau de freinage.

Dans un exemple de réalisation, la deuxième requête est formulée par le conducteur qui considère que le niveau de freinage en stationnement doit être augmenté en prévision d'un changement d'inclinaison du véhicule par rapport à celle prise en compte en réponse à la première requête.

Dans un autre exemple de réalisation, la deuxième requête est formulée par l'unité de commande qui prévoit que la pente d'inclinaison du véhicule peut changer, par exemple si elle est informée, par exemple via le système de navigation par satellite que le véhicule est stationné sur un bateau. La houle peut modifier l'inclinaison de stationnement du véhicule.

De manière avantageuse, les première et deuxième requêtes successives sont émises dans une période de temps donnée.

Un objet de la présente invention est un système de freinage pour véhicule automobile comportant au moins un frein de parking à actionnement électrique destiné à être positionné au niveau d'une roue, une unité de commande configurée pour générer un ordre au frein de parking pour appliquer un freinage de parking ou interrompre l'application d'un freinage de parking à une première intensité suite à une première requête. L'unité de commande est également configurée pour générer un ordre au frein de parking d'appliquer un freinage de parking à une deuxième intensité suite à une deuxième requête émise après la première requête.

Dans un exemple de réalisation, la première requête et la deuxième requête sont émises par un conducteur du véhicule automobile en actionnant une commande de frein de parking.

Dans un autre exemple de réalisation, la première requête et la deuxième requête sont émises par l'unité de commande, la première requête étant un actionnement automatique du frein de parking à l'arrêt du véhicule automobile.

Dans un autre exemple de réalisation, l'une des première et deuxième requêtes est émise par l'unité de commande et l'autre des requêtes est émise par le conducteur du véhicule.

Selon une caractéristique additionnelle, le frein de parking est intégré au frein de service et comporte un motoréducteur.

Un autre objet de la présente invention est un véhicule automobile comportant quatre roues et un système de freinage selon l'invention, le système de freinage comportant deux freins de parking, un pour chaque roue arrière.

Un autre objet de la présente invention est un procédé de fonctionnement du système de freinage selon l'invention équipant un véhicule automobile, dans lequel :
- Suite à un stationnement du véhicule automobile sur un emplacement une première requête est émise pour activer le frein de parking à une première intensité,
- Envoi d'un ordre au frein de parking qui applique une force de freinage de parking à la première intensité,
- Détection de l'inclinaison variable de l'emplacement,
- Envoie d'une deuxième requête pour appliquer une force de freinage de parking à une deuxième intensité,
- Envoi d'un ordre au frein de parking qui applique une force de freinage à la deuxième intensité.

Dans un exemple de réalisation, la première requête est émise par le conducteur ou l'unité de commande, et la deuxième requête est émise par le conducteur.

Dans un autre exemple de réalisation, la première requête est émise par le conducteur ou l'unité de commande et la deuxième requête est émis par l'unité de commande. La deuxième requête peut être émise par l'unité de commande suite à une consultation d'un système de navigation par satellite.

### BREVE DESCRIPTION DES FIGURES

La description qui va suivre sera mieux comprise à l'aide des dessins en annexes sur lesquels :
- la figure 1A est une représentation schématique d'un exemple de stationnement du véhicule auquel s'applique la présente demande,
- la figure 1B est une représentation schématique d'un autre exemple de stationnement du véhicule auquel s'applique la présente demande,
- la figure 2 est une représentation d'un système de freinage selon un exemple de réalisation,
- la figure 3 représente un organigramme d'un exemple de fonctionnement d'un système de freinage selon un exemple de réalisation,
- la figure 4 représente un organigramme d'un exemple de fonctionnement d'un système de freinage selon un autre exemple de réalisation.

### DESCRIPTION DETAILLES DE MODES DE REALISATION

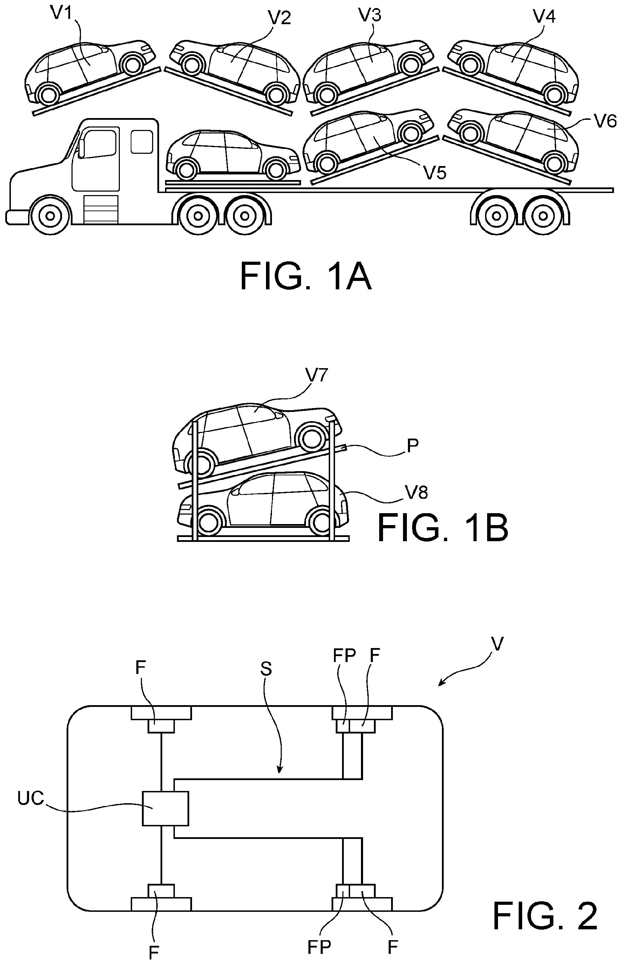

Sur les figures 1A et 1B, on peut voir des configurations de stationnement de véhicules automobiles auxquelles s'applique particulièrement l'invention.

Sur la figure 1A, on peut voir un camion comportant une remorque chargée de véhicules automobiles V. La remorque comporte des plateaux; afin d'optimiser le nombre de véhicules pouvant être chargé, certains plateaux sont inclinés. Les véhicules V1, V2, V3, V4, V5 et V6 sont inclinés. Le chargement se fait comme suit. Le véhicule est chargé sur la remorque qui comporte un plateau mobile. Après stationnement du véhicule sur le plateau, le plateau est incliné.

Sur la figure 1B, on peut voir un système de stationnement à plateau mécanisé permettant de stationner deux véhicules V7, V8 de manière superposée sur un même emplacement au sol. Le premier véhicule V7 se stationne sur le plateau P ; le plateau P s'élève et s'incline vers l'avant, libérant la place pour le stationnement d'un deuxième véhicule V8.

Dans ces deux configurations, le véhicule est stationné sensiblement à l'horizontal, et son inclinaison est ensuite modifiée par un événement extérieur.

Un véhicule V, représenté schématiquement sur la figure 2, comporte un système de freinage S comprenant des freins F équipant chaque roue.

Des freins hydrauliques assurent en général le freinage de service.

Les freins arrières F sont équipés d'une fonction frein de parking FP, qui sont de plus en plus couramment électriques. Un motoréducteur déplace les plaquettes de frein contre le disque ou les garnitures de freinage contre le tambour. Il est courant que seules les roues arrière soient équipées de freins de parking.

Un système de freinage avec quatre freins de parking et/ou un freinage de service électrique ne sort pas du cadre de la présente demande.

Le système de freinage comporte également une unité de commande UC destinée à commander notamment l'actionnement des freins de parking FP.

En effet, l'actionnement des freins de parking électrique est obtenu soit par une commande du conducteur en actionnant un bouton, généralement sous la forme d'un petit levier, ou tout autre moyen de commande, par exemple une commande vocale, soit de manière automatique par exemple à l'arrêt du moteur. Ce signal est détecté par l'unité de commande qui envoie un ordre au motoréducteur de chacun des freins de parking FP d'appliquer une force de freinage d'intensité F1.

Le moyen de commande est par exemple un bouton à trois positions : une position neutre dans laquelle il n'y a aucune commande du frein de parking, une position d'application du freinage et une position d'annulation du freinage. L'action du conducteur sur le moyen de commande est ainsi différente pour l'application du freinage de parking ou pour l'annulation du freinage de parking.

L'unité de commande prend en compte une première requête émise par le conducteur ou par l'unité de commande elle-même, et génère un ordre aux motoréducteurs pour exercer un premier effort de freinage de parking F1. L'unité de commande prend en compte l'inclinaison du stationnement du véhicule pour régler la force de serrage des freins de parking. Plus l'emplacement de la place de stationnement est incliné par rapport à l'horizontal, plus le premier effort de freinage F1 est élevé.

Selon l'invention, l'unité de commande est en outre configurée pour pouvoir tenir compte d'une deuxième requête envoyée soit par le conducteur, soit par l'unité de commande elle-même.

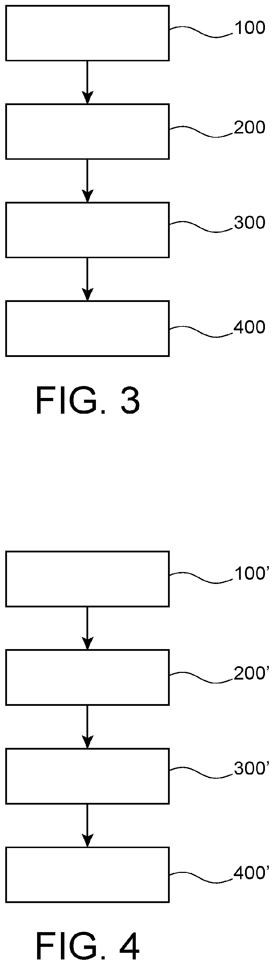

La figure 3 schématise un premier mode de fonctionnement d'un système de freinage selon un exemple de réalisation de l'invention.

Le conducteur stationne le véhicule et envoie une première requête en actionnant la commande de frein de parking à l'étape 100.

A l'étape 200, l'unité de commande UC reçoit cette première requête et émet un ordre aux motoréducteurs des freins de parking FP d'appliquer un effort de freinage F1.

A l'étape 300, le conducteur qui prévoit que l'inclinaison du véhicule peut ou va changer, par exemple car il est stationné sur un plateau mécanisé d'une place de stationnement, envoie une deuxième requête de préférence dans un délai prédéterminé.

A l'étape 400, l'unité de commande UC reçoit cette deuxième requête et émet un ordre aux motoréducteurs des freins de parking FP d'appliquer un effort de freinage F2.

La valeur de F2 est prédéterminée et a été choisie en tenant compte de l'inclinaison maximale de ce type de dispositif de stationnement ou de chargement.

La figure 4 schématise un deuxième mode de fonctionnement d'un système de freinage selon un exemple de réalisation de l'invention.

Selon un mode de réalisation, la première requête et la deuxième requête sont émises par l'unité de commande UC.

A l'étape 100', le conducteur stationne le véhicule et coupe le contact. A l'étape 200', l'unité de commande détectant la coupure du contact envoie un ordre d'application du frein de parking à une intensité F1, qui est fonction de la pente du lieu de stationnement.

A l'étape 300', l'unité de commande UC, après l'application du frein de parking en réponse à la première requête, vérifie si les conditions de stationnement sont susceptibles d'évoluer et de requérir un serrage supplémentaire. Par exemple, si le véhicule est stationné dans un bateau, son inclinaison peut varier du fait de la houle.

Cette condition de stationnement est par exemple détectée par le système de navigation par satellite qui détecte que le véhicule est stationné sur l'eau et donc qu'il est stationné dans ou sur un bateau ou un bac.

A l'étape 400', si l'unité de commande UC détecte une telle éventualité, elle émet une seconde requête et envoie ou émet un ordre aux motoréducteurs des freins de parking d'appliquer un effort de freinage F3. La valeur F3 peut être prédéterminée, en considérant une valeur d'inclinaison maximale du bateau, et être préenregistrée dans la mémoire de l'unité de commande. Alternativement, la valeur de F3 est choisie en fonction de paramètres extérieurs, par exemple des conditions météorologiques. Pour cela l'unité de commande est connectée à internet et a accès à une service de prévisions météorologiques.

Selon l'invention, le conducteur ou l'utilisateur anticipe des changements dans le stationnement du véhicule et adapte la force de freinage du frein de parking en prévoyant une augmentation de l'inclinaison du stationnement du véhicule.

Dans un autre exemple de réalisation, la première requête est émise par l'unité de commande en mode d'actionnement automatique du frein de parking et la deuxième requête est émise par le conducteur qui prévoit que l'inclinaison du véhicule va changer.

Dans un autre exemple de réalisation, la première requête est émise par le conducteur et la deuxième requête est émise par l'unité de commande.

Dans un autre exemple de réalisation, la première requête est émise par l'unité de commande en mode d'actionnement automatique du frein de parking et la deuxième requête est émise par l'unité de commande également.

La présente invention offre l'avantage de permettre d'ajuster le niveau de freinage en fonction de paramètres extérieurs qui peuvent évoluer et peut permettre au conducteur d'intervenir sur le niveau de freinage de parking.

## Revendications

1. Système de freinage pour véhicule automobile comportant au moins un frein de parking (FP) pour immobiliser le véhicule, ledit frein de parking étant à actionnement électrique destiné à être positionné au niveau d'une roue, une unité de commande (UC) configurée pour générer un ordre au frein de parking (FP) pour appliquer un freinage de parking ou interrompre l'application d'un freinage de parking à une première intensité (F1) suite à une première requête correspondant à une première inclinaison du véhicule automobile, dans lequel l'unité de commande (UC) est également configurée pour générer un ordre au frein de parking (FP) d'appliquer un freinage de parking à une deuxième intensité (F2) suite à une deuxième requête émise après la première requête en prévision d'un changement d'inclinaison du véhicule automobile par rapport à la première inclinaison.

2. Système de freinage selon la revendication 1, dans lequel la première requête et la deuxième requête sont émises par un conducteur du véhicule automobile en actionnant une commande de frein de parking.

3. Système de freinage selon la revendication 2, dans lequel la première requête et la deuxième requête sont émises par l'unité de commande (UC), la première requête étant un actionnement automatique du frein de parking (FP) à l'arrêt du véhicule automobile.

4. Système de freinage selon la revendication 1, dans lequel au moins l'une des première et deuxième requêtes est émise par l'unité de commande (UC) et l'autre des requêtes est émise par le conducteur du véhicule.

5. Système de freinage selon l'une des revendications 1 à 4, dans lequel le frein de parking (FP) est intégré au frein de service et comporte un motoréducteur.

6. Véhicule automobile comportant quatre roues et un système de freinage selon l'une des revendications précédentes, le système de freinage comportant deux freins de parking (FP), un pour chaque roue arrière.

7. Procédé de fonctionnement du système de freinage selon l'une des revendications 1 à 5 équipant un véhicule automobile, dans lequel :
- Suite à un stationnement du véhicule automobile sur un emplacement une première requête est émise pour activer le frein de parking à une première intensité (F1),
- Envoi d'un ordre au frein de parking (FP) qui applique une force de freinage de parking à la première intensité (F1),
- prévision d'un changement d'inclinaison de l'emplacement,
- Envoie d'une deuxième requête pour appliquer une force de freinage de parking à une deuxième intensité (F2, F3),
- Envoi d'un ordre au frein de parking qui applique une force de freinage à la deuxième intensité (F2, F3).

8. Procédé de fonctionnement selon la revendication 7, dans lequel la première requête est émise par le conducteur ou l'unité de commande, et la deuxième requête est émise par le conducteur.

9. Procédé de fonctionnement selon la revendication 7, dans lequel la première requête est émise par le conducteur ou l'unité de commande et la deuxième requête est émis par l'unité de commande.

10. Procédé de fonctionnement selon la revendication 9, dans lequel la deuxième requête est émise par l'unité de commande suite à une consultation d'un système de navigation par satellite.
